**Europäisches Patentamt**

(19) **European Patent Office**

**Office européen des brevets**

(11) Veröffentlichungsnummer: **0 110 170**
**B1**

(12) **EUROPÄISCHE PATENTSCHRIFT**

(45) Veröffentlichungstag der Patentschrift:
**13.05.87**

(51) Int. Cl.⁴: **A 23 L 1/08**

(21) Anmeldenummer: **83110862.6**

(22) Anmeldetag: **29.10.83**

(54) Honigpulver, in dem die natürlichen Aromastoffe erhalten bleiben, und Verfahren zu dessen Herstellung.

(30) Priorität: **08.11.82 HU 357782**

(43) Veröffentlichungstag der Anmeldung:
**13.06.84 Patentblatt 84/24**

(45) Bekanntmachung des Hinweises auf die Patenterteilung:
**13.05.87 Patentblatt 87/20**

(84) Benannte Vertragsstaaten:
**BE DE FR GB IT NL**

(56) Entgegenhaltungen:
**US - A - 2 693 420**
**US - A - 3 061 444**
**US - A - 3 879 567**
**US - A - 3 950 551**

**"Sugar Chemistry"** R.S. Schallenberger et al. Avi
Publishing Company USA 1975 pp. 158-159

**Die Akte enthält technische Angaben, die nach dem Eingang der Anmeldung eingereicht wurden und die nicht in dieser Patentschrift enthalten sind.**

(73) Patentinhaber: **CHINOIN Gyogyszer és Vegyészeti Termékek Gyára RT., To utca 1-5, H-1045 Budapest IV (HU)**

(72) Erfinder: **Szejtli, József, Dr., Endrödi S. u. 38/40, H-1026 Budapest (HU)**
Erfinder: **Tardy geb. Lengyel, Márta, Dr., Csalán u. 43/b, H-1025 Budapest (HU)**

(74) Vertreter: **Lotterhos, Hans Walter, Dr.-Ing., Lichtensteinstrasse 3, D-6000 Frankfurt am Main 1 (DE)**

**Beschreibung**

Die Anmeldung betrifft ein Honigpulver, das seine natürlichen Aromastoffe für längere Zeit bewahren kann, und ein Verfahren zu dessen Herstellung mit Hilfe von Cyclodextrinen.

Die gewerbliche Verwendung des Honigs ist – infolge seiner hohen Viskosität – mit einigen Schwierigkeiten verbunden, da bei den automatischen Maschinenreihen die Dosierung kompliziert ist und bei der Entleerung der Behälter ein 5%iger Verlust auftritt.

Zur Beseitigung dieser Schwierigkeiten sind bereits zahlreiche Verfahren bekannt, die sich hauptsächlich in drei Gruppen unterteilen lassen:

1) Der Honig wird durch Kristallisation der entsprechenden Komponenten verfestigt (US-PS 2 021 450). Hier wird gewünschtenfalls auch eine Vakuumverdampfung durchgeführt.

2) Der Honig wird mit Milch, Milchpulver oder Butter vermischt und das erhaltene Produkt unmittelbar oder nach Verdünnung mit Wasser verwendet (GB-PS 318 388, US-PS 1 854 430, DE-PS 848 448).

3) Der Honig wird mit Stärke verfestigt, wobei die Stärke infolge der Wirkung des in dem Honig enthaltenen Wassers quillt (US-PSs 2 693 420, 3 103 439 und 3 879 567). Dies erfordert eine Wärmebehandlung des Honigs, wobei der grösste Teil der Geruchs- und Aromastoffe verloren geht. Ein weiterer Verlust tritt während des Backens ein, so dass die so erhaltene Backware nur noch den Zuckergehalt des Honigs aufweist.

Es ist bekannt, dass die Cyclodextrine in ihrem apolaren Hohlraum Aromastoffe binden können (vgl. «Sugar Chemistry» R.S. Schallenberger et al., Avi Publishing Company, USA 1975, S. 158–159). Zu diesem Zweck wird die konzentrierte und erwärmte wässrige Cyclodextrinlösung mit den Aromastoffen oder mit deren Lösung, insbesondere in Äthanol, vermischt und abgekühlt, wobei der Einschlusskomplex von Aromastoffen in Cyclodextrin auskristallisiert. Auf diese Weise können Aromastoffe unbegrenzte Zeit an der Luft aufbewahrt und gelagert werden. Die Bindung von Fleisch- und Gemüsearomastoffen an Cyclodextrin ist in der US-PS 3 061 444 beschrieben.

Ein wesentliches Charakteristikum der bekannten Verfahren zur Bindung von Aromastoffen mittels Cyclodextrin besteht darin, dass die Komponenten: Cyclodextrin und Aromastoffe, in einer konzentrierten wässrigen oder wässrig-alkoholischen Lösung zur Reaktion gebracht werden. Dies ist deshalb erforderlich, weil die Bildung von Komplexen ein umkehrbarer chemischer Prozess ist, dessen Gleichgewicht durch Erhöhung der Konzentration der Komponenten in Richtung der Komplexbildung verschoben werden kann. Daraus ist zu schliessen, dass dieses Verfahren mit verdünnten wässrigen Lösungen nicht durchführbar ist.

Bis heute ist kein Verfahren bekannt, das es ermöglicht, die Aromastoffe des Honigs bis zur Verwendung zu bewahren und erst bei der Verwendung frei zu setzen. Ziel der Erfindung war, eine feste, pulvrige Zubereitung aus Honig herzustellen, die nicht hygroskopisch ist und in der die Aromastoffe des Honigs bis zur Verwendung erhalten bleiben.

Es wurde überraschenderweise gefunden, dass eine feste Honigzubereitung, die diesen Anforderungen entspricht, erhalten werden kann, wenn man

a) 1 Gwt. Honig mit 0,8 Gwt. Stärke, vorhydrolysierter Stärke oder Mehl und 0,1 bis 0,3 Gwt. Cyclodextrin in eine homogene Mischung überführt, diese 20 Minuten bei einer Temperatur von 100°C behandelt, zerkleinert, 10 bis 50 Stunden bei einer Temperatur von 50 bis 55°C trocknet, dann mit 0,01 bis 1,0 Gwt. hydrophobisierter kolloidaler Kieselsäure oder Erdalkalimetallstearat vermischt und pulverisiert oder

b) 1 Gwt. Honig mit 6 Gwt. einer heiss gesättigten Lösung von Cyclodestrin in Wasser vermischt, die erhaltene homogene Lösung gefriert und lyophilisiert, sodann mit 0,01 bis 1,0 Gwt. hydrophobisierter kolloidaler Kieselsäure oder Erdalkalimetallstearat vermischt und pulverisiert.

Als Cyclodextrin wird $\alpha$-, $\beta$- und/oder $\gamma$-Cyclodextrin verwendet.

Das Honigpulver der Erfindung kann an der Luft gelagert werden, ohne dass die Einzelteilchen zusammenkleben, und gibt die Aromastoffe erst beim Verzehr der daraus hergestellten Backware ab.

Das Honigpulver der Erfindung ist von den verwendeten Ausgangsstoffen abhängig und enthält

30 bis 70 Gew.%, vorzugsweise 40 Gew.% dehydrierten Honig,

0 bis 60 Gew.%, vorzugsweise 50 Gew.% Stärke, vorhydrolysierte Stärke oder Mehl,

6 bis 60 Gew.%, vorzugsweise 10 Gew.% Cyclodextrin und

0,01 bis 5,0 Gew.% Fliessmittel, wie hydrophobisiertes Siliciumdioxyd oder Erdalkalimetallstearat,

wobei die Aromastoffe in Form von Cyclodextrin-Einschlusskomplexen vorliegen.

Art und Menge der Aromastoffe, die in dem Honigpulver der Erfindung als Cyclodextrin-Einschlusskomplexe vorliegen, sind von der Art des verwendeten Honigs abhängig und können deshalb nicht exakt angegeben werden.

Unter «dehydriertem Honig» ist der Honig zu verstehen, dessen flüchtige Komponenten, wie z.B. Wasser, entfernt worden sind.

Die Erfindung wird in den folgenden Beispielen näher erläutert, eine Beschränkung ist hieraus nicht herzuleiten.

Beispiel 1

50 g Honig mit einem Feuchtigkeitsgehalt von 18%, 40 g Maisstärke und 10 g $\beta$-Cyclodextrin werden homogenisiert und 30 bis 40 Minuten gerührt. Die erhaltene Masse wird 20 Minuten bei einer Temperatur von 100°C getrocknet, wobei die Masse quillt. Danach wird sie sofort – noch warm – zerkleinert und bei einer Temperatur von 50 bis 55°C je nach dem Feuchtigkeitsgehalt des Honigs 10 bis 30 Stunden nachgetrocknet. Anschliessend vermischt man die Masse mit 0,5 Gew.% hydrophobisierter kolloidaler Kieselsäure, wie Aerosil-900, zerkleinert sie in einer Messermühle und homogenisiert sie. Nach dem Sieben werden die Teilchen mit einer Korngrösse von weniger als 50 µm verarbeitet. Es werden 83,2 g Endprodukt erhalten.

Die Wasseraufnahme des erhaltenen Pulvers wurde in folgender Weise getestet: aus 2 g Honigpulver wurde eine 1 mm dicke Schicht hergestellt, deren Feuchtigkeitsgehalt bei Raumtemperatur täglich durch Messung des Gewichts bestimmt und in Abhängigkeit von der Zeit angegeben wurde.

| Zeit | 1 | 2 | 5 | 6 | 7 | 8 | 9 | 14 |
|---|---|---|---|---|---|---|---|---|
| Feuchtigkeit | 2,1 | 3,3 | 4,9 | 5,7 | 5,4 | 5,0 | 4,4 | 4,2 |

Das Honigpulver mit einem Gehalt von 0,5 Gew.% Aerosil-900 wies die Konsistenz eines freifliessenden Pulvers auch noch nach zwei Monaten auf.

Zur Kontrolle wurde eine Zubereitung aus 50% Honig und 50% Maisstärke – also ohne β-Cyclodextrin – hergestellt. Die sensorische Analyse ergab, dass 84% der nicht amtlichen Testpersonen das Honigpulver der Erfindung für besser als das des Kontrollversuchs hielten.

Um diese Ergebnisse durch Analysewerte zu stützen, die mit Instrumenten erhalten worden sind, wurde die stabilisierende Wirkung der Cyclodestrin-Einschlusskomplexe durch Computergaschromatographie überprüft. Hierbei wurden je 50 g Honigpulver der Erfindung und des Kontrollversuchs mit 50%igem Gehalt an Honig sowie 50 g einer Mischung, die aus Honig und Maisstärke 1:1 ohne Wärmebehandlung hergestellt worden war, 5 Minuten in 500 ml Wasser gerührt. Sodann gab man 100 mg α-Amylase bakterieller Herkunft zu, rührte bei Zimmertemperatur weitere 5 Minuten, erhitzte die Lösung 30 Minuten mit gleichmässiger Geschwindigkeit bis zum Siedepunkt und führte eine Wasserdampfdestillation durch. In der mit Trockeneis gekühlten Vorlage wurden innerhalb von 90 Minuten 200 ml Flüssigkeit aufgefangen, die mit 5 ml Dichlormethan extrahiert wurde. Dann trennte man die organische Phase ab und unterwarf sie der Gaschromatographie.

Die Untersuchung ergab, bei Honig, der ohne Wärmebehandlung 100 Einheiten des Aromastoffes enthielt, werden im Honigpulver mit 10% β-Cyclodextrin 107 Einheiten und im Kontrollpulver ohne β-Cyclodextrin nur 51 Einheiten des Aromastoffes festgestellt.

Beispiel 2

Es wird wie in Beispiel 1 verfahren, jedoch mit dem Unterschied, dass Maisstärke durch die gleiche Menge Kartoffelstärke ersetzt und die Trocknung 24 bis 48 Stunden bei Zimmertemperatur und im Vakuum durchgeführt wird. Als Fliessmittel wird 1% Magnesiumstearat zugegeben. Es werden 82,7 g Endprodukt erhalten.

Beispiel 3

Es wird wie in Beispiel 1 verfahren, jedoch mit dem Unterschied, dass Maisstärke durch die gleiche Menge Mehl ersetzt wird. Es werden 80,1 g Endprodukt erhalten.

Beispiel 4

Es wird wie in Beispiel 1 verfahren, jedoch mit dem Unterschied, dass Maisstärke durch die gleiche Menge schwach hydrolysierter Stärke (der Firma Küritz, DDR) ersetzt und die Trocknung mit Hilfe einer mit Dampf beheizten Trommel durchgeführt wird. Es werden 81,4 g Endprodukt erhalten.

Beispiel 5

Es wird wie in Beispiel 1 verfahren, jedoch mit dem Unterschied, dass das Cyclodextrin in einer Menge von 0 bis 10 Gew.% verwendet wird. Die sensorische Analyse von diesen Produkten ergibt, dass 92% der Testpersonen das Produkt mit 10% Cyclodextringehalt für das beste, und 50% der Testpersonen das Produkt mit 6% und das ohne Cyclodextrin für gut halten.

Beispiel 6

In 100 ml siedendem Wasser löst man 50 g β-Cyclodextrin, vermischt die heisse Lösung mit 25 g Honig, der 18% Wasser enthält, rührt 5 Minuten und lyophilisiert. Das trockene Produkt wird sofort mit 0,5 Gew.% hydrophobisierter kolloidaler Kieselsäure vermischt. Es werden 69,9 g Endprodukt erhalten.

Beispiel 7

5 g Honig mit einem Wassergehalt von 18% werden mit 4 g Maisstärke und 1 g α-Cyclodextrin trocken homogenisiert und danach wie in Beispiel 1 weiter aufgearbeitet. Es werden 8,2 g Endprodukt erhalten.

Beispiel 8

5 g Honig mit einem Wassergehalt von 18% werden mit 4 g Maisstärke und 1 g γ-Cyclodextrin trocken homogenisiert und danach wie in Beispiel 1 weiter aufgearbeitet. Es werden 8,3 g Endprodukt erhalten.

**Patentansprüche**

1. Honigpulver, in dem die natürlichen Aromastoffe erhalten bleiben, dadurch gekennzeichnet, dass es

30 bis 70 Gew.% dehydrierten Honig,
0 bis 60 Gew.% Stärke, vorhydrolysierte Stärke oder Mehl,
6 bis 60 Gew.% α- und/oder β- und/oder γ-Cyclodextrin und
0,01 bis 5,0 Gew.% Fliessmittel, wie hydrophobiertes Siliciumdioxyd oder Erdalkalimetallstearat

enthält, wobei die Aromastoffe des Honigs in Form von Cyclodextrin-Einschlusskomplexen vorliegen.

2. Honigpulver gemäss Anspruch 1, dadurch gekennzeichnet, dass der Gehalt an dehydriertem Honig 40 Gew.%, an Stärke, vorhydrolysierter Stärke oder Mehl 50 Gew.% und an α- und/oder β- und/oder γ-Cyclodextrin 10 Gew.% beträgt.

3. Verfahren zur Herstellung von Honigpulver, in dem die natürlichen Aromastoffe erhalten bleiben, dadurch gekennzeichnet, dass man

a) 1 Gwt. Honig mit 0,8 Gwt. Stärke, vorhydrolysierter Stärke oder Mehl und 0,1 bis 0,3 Gwt. Cyclodextrin in eine homogene Mischung überführt, diese 20 Minuten bei einer Temperatur von 100°C behandelt, zerkleinert, 10 bis 50 Stunden bei einer Temperatur von 50 bis 55°C trocknet, danach mit 0,01 bis 1,0 Gwt. hydrophobisierter kolloidaler Kieselsäure oder Erdalkalimetallstearat vermischt und pulverisiert, oder

b) 1 Gwt. Honig mit 6 Gwt. einer heissen gesättigten Lösung von Cyclodextrin in Wasser vermischt, die erhaltene homogene Lösung gefriert und lyophilisiert, danach mit 0,01 bis 1,0 Gwt. hydrophobisierter kolloidaler Kieselsäure oder Erdalkalimetallstearat vermischt und pulverisiert.

4. Verfahren gemäss Anspruch 3, dadurch gekennzeichnet, dass man als Cyclodextrin α- und/oder β- und/oder γ-Cyclodextrin verwendet.

## Claims

1. Honey powder in which the natural flavours are retained, characterised in that it contains

| | |
|---|---|
| 30 to 70% | by weight of dehydrated honey, |
| 0 to 60% | by weight of starch, pre-hydrolysed starch or flour, |
| 6 to 60% | by weight of α- and/or β- and/or γ-cyclodextrin and |
| 0.01 to 5.0% | by weight of lubricant such as hydrophobic silicon dioxide or alkaline earth metal stearate, |

the flavourings of the honey being present in the form of cyclodextrin inclusion complexes.

2. Honey powder as claimed in claim 1, characterised in that the content of dehydrated honey is 40% by weight, starch, prehydrolysed starch or flour is 50% by weight and α- and/or β- and/or γ-cyclodextrin is 10% by weight.

3. Process for producing honey powder in which the natural flavours are retained, characterised in that

a) 1 part of honey is converted into a homogeneous mixture with 0.8 parts of starch, prehydrolysed starch or flour and 0.1 to 0.3 parts of cyclodextrin, this homogeneous mixture is treated for 20 minutes at a temperature of 100°C, comminuted, dried for 10 to 50 hours at a temperature of 50 to 55°C, then mixed with 0.01 to 1.0 parts of hydrophobic colloidal silica or alkaline earth metal stearate and powdered, or

b) 1 part of honey is mixed with 6 parts of a hot saturated solution of cyclodextrin in water, the homogeneous solution obtained is frozen and lyophilised, then mixed with 0.01 to 1.0 parts of hydrophobic colloidal silica or alkaline earth metal stearate and powdered.

4. Process as claimed in claim 3, characterised in that α- and/or β- and/or γ-cyclodextrin is used as the cyclodextrin.

## Revendications

1. Poudre de miel dans laquelle les arômes naturels restent conservés, caractérisée en ce qu'elle contient

| | | | |
|---|---|---|---|
| 30 | à 70 | % | en poids de miel déshydraté, |
| 0 | à 60 | % | en poids d'amidon, d'amidon hydrolysé au préalable ou de farine, |
| 6 | à 60 | % | en poids d'α- et/ou β- et/ou γ-cyclodextrine et |
| 0,01 à | 5,0 | % | en poids de solvant, tel que dioxyde de silicium rendu hydrophobe ou stéarate de métal alcalino-terreux |

les substances aromatique du miel étant présentes sous forme de complexes d'inclusion de cyclodextrine.

2. Poudre de miel selon la revendication 1, caractérisée en ce que la teneur en miel déshydraté est de 40% en poids, en amidon, amidon hydrolysé au préalable ou farine – de 50% en poids, en α- et/ou β- et/ou γ-cyclodextrine – de 10% en poids.

3. Procédé de production de poudre de miel dans laquelle les arômes naturels restent conservés, caractérisé en ce que

a) 1 partie en poids de miel avec 0,8 partie en poids d'amidon, d'amidon hydrolysé au préalable ou de farine et 0,1 à 0,3 partie en poids de cyclodextrine sont transformés en un mélange homogène, ce mélange est traité pendant 20 minutes à une température de 100°C, broyé, séché pendant 10 à 50 heures à une température de 50 à 55°C, puis mélangé avec 0,01 à 1,0 partie en poids d'acide silicique colloïdal rendu hydrophobe ou de stéarate de métal alcalino-terreux et pulvérisé, ou

b) 1 partie en poids de miel est mélangé avec 6 parties en poids d'une solution saturée chaude de cyclodextrine dans l'eau, la solution homogène obtenue est congelée et lyophilisée, puis mélangée avec 0,01 à 1,0 partie en poids d'acide silicique colloïdal rendu hydrophobe ou de stéarate
de métal alcalino-terreux et pulvérisée.

4. Procédé selon la revendication 3, caractérisée en ce qu'on utilise en tant que cyclodextrine
l'α- et/ou la β- et/ou la γ-cyclodextrine.